**Europäisches Patentamt**

**European Patent Office**

**Office européen des brevets**

(19)

(11) Veröffentlichungsnummer : **0 142 625
B1**

(12)

# EUROPÄISCHE PATENTSCHRIFT

(45) Veröffentlichungstag der Patentschrift :
27.07.88

(21) Anmeldenummer : **84109493.1**

(22) Anmeldetag : **09.08.84**

(51) Int. Cl.⁴ : **F 16 B 13/04**

(54) Spreizdübel mit axialer Verformungszone.

(30) Priorität : **25.08.83 DE 3330669**

(43) Veröffentlichungstag der Anmeldung :
**29.05.85 Patentblatt 85/22**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
EP-A- 0 002 654
DE-A- 3 023 411
GB-A-   444 623

(73) Patentinhaber : **Mächtle GmbH
Jahnstrasse 4
D-7015 Korntal-Münchingen (DE)**

(72) Erfinder : **Mächtle, Roland
Kirschenweg 8
D-7250 Leonberg (DE)**
Erfinder : **Mächtle, Daniel
Hörnleweg 8
D-7000 Stuttgart 31 (DE)**

(74) Vertreter : **Raeck, Wilfrid, Dipl.-Ing.
Moserstrasse 8
D-7000 Stuttgart 1 (DE)**

## Beschreibung

Die Erfindung betrifft einen Spreizdübel zur Befestigung in einer Verankerungsbohrung mittels einer wenigstens bohrlochgrundseitig spreizbaren Dübelhülse, mit einer die Hülse längs durchsetzenden Schraube oder einem Gewindebolzen, der einen am Spreizabschnitt der Hülse angreifenden Spreizkonus sowie an seinem dem Spreizkonus gegenüberliegenden Ende ein Widerlager trägt, wobei das Aufweiten des Spreizabschnittes durch Verkürzen des Abstandes des Spreizkonus vom Widerlager erfolgt, und mit einer axialen Verformungszone in Form einer vom Innenumfang der Dübelhülse ausgehenden nutartigen Wandstärkenverringerung, die nach anfänglichem Greifen des Spreizabschnittes der Dübelhülse an der Bohrlochwandung mit einer Verkürzung der Hülsenlänge zur Wirkung kommt.

Bei einem aus der DE-A-31 37 226 bekannten Spreizdübel der eingangs bezeichneten Art ist als axiale Verformungszone eine Umfangsnut am Innenumfang einer Dübelhülse zwischen den Hülsenenden vorgesehen, und zwar entweder unmittelbar am Innenmantel der Dübelhülse oder einer die Dübelhülse zur Bohrlochmündung hin verlängernden Distanzhülse. Dieser durch Wandstärkenschwächung gebildeten Verformungszone der Dübel- oder Distanzhülse kommt insofern große Bedeutung zu, als bei schon im Bohrloch festsitzender gespreizter Dübelhülse der zu befestigende Gegenstand überhaupt erst wirksam gegen die das Bohrloch enthaltene Wand festgezogen werden kann.

Die axiale Verformungszone sorgt folglich dafür, daß bei bereits in der Wandbohrung festsitzendem Dübel und aufgeweitetem Spreizabschnitt bei weiterem Anziehen der Schraubmutter oder eines Schraubkopfes des Gewindeankers noch eine zusätzliche Verkürzung des Abstandes zwischen Spreizkonus und Widerlager stattfinden kann, längs der dann die Anpreßkraft für den an der Wand zu befestigenden Gegenstand aufgebracht wird, um beispielsweise Ungleichmäßigkeiten an der Wand oder vorspringende Grate am Gegenstand einzuebnen und eine verteilte Flächenpressung zu erreichen.

Auch bei einem aus der EP-A-2654 bekannten Hinterschnittdübel ist für eine in die Wandbohrung eingeführte Dübelhülse bekannt, in ihrem dem Bohrungseingang benachbarten Bereich radiale Ausdrehungen vorzusehen, die tief genug sind, um eine axiale Verkürzung der Hülse zu ermöglichen, wenn die Schraubmutter auf einen die Hülse durchdringenden Schraubbolzen angezogen wird.

Aus der DE-A-30 23 411 ist ein Schwerlastanker bekannt, bei dem in einem Abstandsbereich zwischen dem Widerlager und der Spreizhülse ein Abstandshalter vorgesehen ist und das Aufweiten des Spreizabschnittes durch Verkürzung des zwischen dem Spreizkörper und dem Widerlager am Ankerbolzen vorhandenen Abstandes erfolgt. Als Abstandshalter sind aus den die Dübelhülse bildenden Segmenten schräg bzw. wendelförmig sich im Umfangsverlauf der Dübelhülse erstreckende Stützlaschen freigestanzt, die entweder von der Stirnseite der Dübelhülse oder des Widerlagers ausgehen oder an beiden Enden Verbindung zur Dübelhülsenschale und einer zugeordneten Distanzhülsenschale besitzen. Diese Stützlaschen sind aufgrund der erforderlichen Schnitt- und Biegewerkzeuge kostspielig in der Herstellung und haben zum Nachteil, daß sie sich unkontrolliert schnell verformen und deshalb ihre.

Abstandshalterfunktion schon verlieren, bevor der Spreizabschnitt der Dübelhülse in der Wandbohrung festen Halt gefunden hat. Hinzukommt, daß durch den offenen Abstandsbereich schon beim Einführen des Schwerlastankers in die Wandbohrung Abrieb und Bohrklein an den Gewindebolzen gelangen und dessen Schraubfunktion und auch den Verkürzungsvorgang der Dübelhülse behindern.

Bei einem anderen aus der GB-A-444 623 bekannten Spreizdübel sind die die Dübelhülse bildenden Spreizschalen oder -segmente an ihrem bohrlochmündungsseitigen Ende mit Hilfe einer auf dieses Ende aufgeschobenen Kappe zusammengehalten. Die Kappe enthält eine zentrische Öffnung zum Durchgang des Schraubbolzens und einen inneren freibleibenden, nicht auf die Dübelhülse aufgeschobenen Bereich und ist an ihrem Umfang in eine oder mehrere Umfangsrillen der Dübelhülsenschalen eingedrückt oder umgebördelt, um so den Zusammenhalt der Dübelhülse zu gewährleisten und um zu verhindern, daß sich die Kappe bei Verkürzung des Abstandes zwischen Widerlager und Spreizkonus wirkungslos weiter auf die Dübelhülse aufschiebt, bevor der Spreizabschnitt an der Bohrlochwandung verankert ist.

Diese zur axialen Verformung dienende Kappe ist als umständliche und unzweckmäßige Lösung schon deshalb anzusehen, weil sie eine zusätzliche spanende Bearbeitung am Umfangsende der Hülsenschalen erfordert, damit die dort aufgeschobene Kappe nicht umfangsmäßig übersteht und das Einführen des Spreizdübels in die Wandbohrung behindert. Außerdem ist es unerläßlich, vor dem Zusammenbau des Dübels die komplettierte Spreizhülse in einer Drehmaschine einzuspannen, damit die Kappe in die Umfangsnuten der Hülsensegmente eingerollt und umgebördelt werden kann.

Die aus dem eingangs beschriebenen Stand der Technik bekannte innere Umfangsnut in der Spreiz- oder Distanzhülse erfordert eine umständliche und kostspielige spanende Bearbeitung, da die Umfangsnut auf einer Drehmaschine schwer zugänglich ist und mit Radialhub eingestochen werden muß. Dazu sind aufwendige Drehmaschinen und lange Stückzeiten notwendig, was bei der hier zu berücksichtigenden Massenproduktion merkliche Kosten verursacht.

Der Erfindung liegt die Aufgabe zugrunde, bei einem Spreizdübel der eingangs bezeichneten Art die axiale Verformungszone zu vereinfachen und den axialen Verformungsvorgang dahingehend abzusichern, daß er im wesentlichen unbehindert dem Spannelement, d. h. der auf dem Gewindeanker sitzenden Schraubmutter oder dem mit dieser verbundenen Schraubenkopf wirksam weitergegeben wird.

Erfindungsgemäß ist diese Aufgabe dadurch gelöst, daß die Wandstärkenverringerung wenigstens aus einer zu der an der Bohrlochmündung befindlichen Stirnseite sowie zum Innenumfang der Dübelhülse hin offenen Ausnehmung besteht, so daß der durch sie erzeugte, am Widerlager anliegende, in der Stärke verringerte Hülsenwandabschnitt sich im Zug der Hülsenverkürzung radial nach außen aufweitet, und daß die Ausnehmung in einem der beabsichtigten Länge der axialen Verformungszone entsprechenden Tiefenmaß aus der Hülsenwand herausgearbeitet ist.

Eine von der Stirnfläche der Dübelhülse oder Distanzhülse ausgehende Umfangsnut läßt sich mit einfachen Werkzeugen und auch auf einfachen, schnell arbeitenden Maschinen bzw. Drehautomaten fertigen, wenn die Umfangsnut am bohrlochmündungsseitigen Ende der Dübel- oder Distanzhülse von der Stirnseite her eingestochen oder eingebohrt wird. Damit erübrigen sich die bisher notwendigen zeitaufwendigen maschinellen Handhabungen beim Einfahren des Drehstahls in die Dübel- oder Distanzhülse. Andererseits ermöglicht die Integrierung der axialen Verformungszone in die Hülse selbst einen einfachen Komplettierungsvorgang des gesamten Spreizdübels.

Ein wichtiger Gesichtspunkt für die erfindungsgemäß vorgeschlagene Bauweise besteht darin, daß das die axiale Verkürzung verursachende Verbiegen des durch die Ausnehmung geschwächten Wandabschnittes unmittelbar dem Widerlager, z. B. einer Beilagscheibe gegenüber erfolgt, also an einer am Bohrlocheingang liegenden Stelle, so daß von der Bohrlochwandung her keine Behinderungen auf den radialen Aufweitvorgang der Vorformungszone wirken.

Im Gegensatz dazu setzt die Längsverkürzung der Dübelhülse bei einer z. B. in der Längsmitte der Innenwandung angeordneten Verformungszone voraus, daß der zwischen Widerlager und Verformungszone befindliche Hülsenabschnitt sich innerhalb der Wandbohrung relativ frei verschieben läßt, was aufgrund der vorhandenen Reibwerte und der schon erfolgten Aufweitung der Dübelhülse nicht möglich ist.

Außerdem wird mit der vorgeschlagenen Bauform erreicht, daß die axiale Länge der Verformungszone ohne zusätzlichen Aufwand sehr einfach nach Wunsch variiert werden kann, indem man den Bohrer oder ein anderes Bearbeitungswerkzeug vom Ende der Dübelhülse her mehr oder weniger tief einfährt. Ein Vorteil einer nach innen offenen Ausnehmung besteht auch darin, daß bei der axialen Verformung der verjüngte Wandabschnitt sich weitgehend nach außen aufweitet, so daß auf das Gewinde des Schraubbolzens und somit auf die Dübelfunktion keine Behinderung ausgeübt wird.

Wenn die Dübelhülse aus einer Spreizhülse und einer bohrlochmündungsseitig den Gewindebolzen umfassenden Abstandshalterhülse besteht, geht die Ausnehmung in Tiefenrichtung von der bohrlochmündungsseitigen Stirnseite der Abstandshalterhülse aus.

Bei einer speziellen Ausführungsform eines Spreizdübels gemäß der Erfindung kann die axiale Verformungszone aus einer sowohl vom Innen- als auch vom Außendurchmesser her erfolgten Wandstärkenverringerung der Hülse bestehen.

Da während der axialen Verformung der in der Wandstärke verringerte Stirnabschnitt der jeweiligen Hülse, gleiche Pressung über die gesamte am Widerlager anliegende Fläche vorausgesetzt, durch Umbiegung bzw. radiale Aufweitung stattfindet, sollten von vornherein solche Verhältnisse berücksichtigt werden, bei denen in der Wandbohrung oder bei Durchsteckmontage in der Bohrung des zu befestigenden Gegenstandes genügend Platz verbleibt, in dem sich die beschriebene theoretische radiale Aufweitung vollziehen kann.

Dies gilt auch für die Fälle, wo von vornherein feststeht, daß ein verhältnismäßig großer axialer Verformungsweg benötigt wird, um die vorgeschriebene Befestigung des Gegenstandes mit Hilfe des Dübels durchzuführen. In diesen Fällen kann es folglich zweckmäßig sein, insbesondere bei engeren Toleranzen der Wandbohrung und auch der Durchgangsbohrung im zu befestigenden Gegenstand, wenn die Wandstärke der Hülse vom Außendurchmesser aus verringert wird, um so einen äußeren Aufweitraum zu schaffen.

Um ein radial auswärts gerichtetes Umbiegen des in der Wandstärke verringerten Wandabschnittes bzw. eine solche Verformungsrichtung zu begünstigen oder einzuleiten, kann der die axiale Verformungszone bildende Wandabschnitt verringerter Wandstärke in Richtung auf seine Stirnseite verjüngt sein.

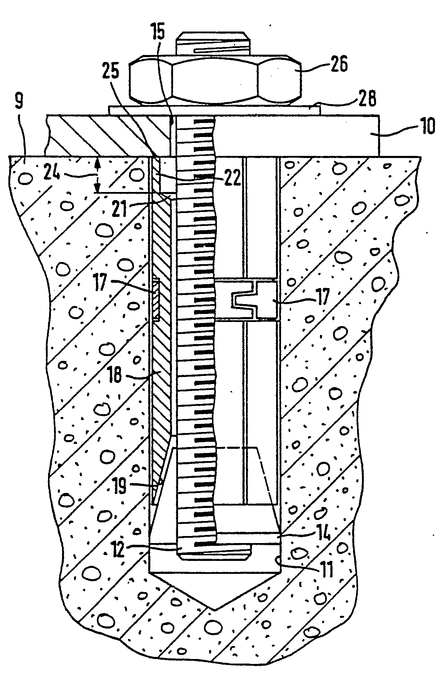

Weitere Vorteile und Merkmale ergeben sich aus der nachfolgenden Beschreibung eines Ausführungsbeispiels anhand der Zeichnung, die einen Längsschnitt durch einen Spreizdübel mit einteiliger Dübelhülse nach der Erfindung zeigt.

Zur Befestigung eines Bauteils 10 an einer Wand 9 ist ein Spreizdübel in ein zylindrisches Bohrloch 11 eingeführt. Auf einer Gewindespindel 12 ist eine Konusmutter 14 aufgeschraubt, und auf dem rückwärtigen, äußeren Teil der Gewindespindel sitzen eine von außen an dem Bauteil 10 anliegende Beilagscheibe 28 sowie eine Schraubmutter 26. Der Bauteil 10 enthält eine Befestigungsbohrung 15, deren Durchmesser für den Durchgang des Gewindebolzens 12 ausreicht. Grundsätzlich könnte der Bauteil auch eine im Durchmesser größere Befestigungsbohrung 15 aufweisen, beispielsweise entsprechend dem Bohrloch 11, so daß dann der Dübel in sog. Durchsteckmontage durch den zu befestigenden Bauteil 10 in das Bohrloch hineingesteckt werden kann.

Zwischen Konusmutter 14 und dem einen äußeren Randbereich der Bohrlochöffnung abdeckenden Bauteil 10 ist eine Spreizhülse 18 gehalten, die im vorliegenden Fall aus mehreren, z. B. mittels einer Ringfeder 17 zusammengehaltenen Schalen oder Segmenten besteht.

Diese Hülsensegmente sind an ihrem bohrlochgrundseitigen Ende mit Innenkonusflächen 19 versehen, deren Kegelwinkel etwa demjenigen des Spreizkonus 14 entspricht.

Am bohrlochmündungsseitigen Ende der Spreizhülse 18 befindet sich eine innere Umfangsnut bzw. ein in der Wandstärker verringerter Wandabschnitt 22, dessen Tiefe 24 sich nach der erforderlichen Länge der gewünschten axialen Verformungszone richtet. Zwischen der so gebildeten axialen Verformungszone 22 und der ungeschmälerten Wandstärke der Spreizhülse 18 bzw. deren Schalen ist ein allmählicher Übergang 24 vorgesehen.

Wenn beim Festziehen der Schraubmutter 26 zunächst die Spreizhülse 18 im Bereich der Konusmutter 14 aufgeweitet wird, findet ein die Haltekraft des Spreizdübels im wesentlichen bestimmender Eingriff zwischen dem Umfang der Spreizhülse und der Wandung des Bohrloches 11 statt. Wenn bei weiterem Anziehen der Schraubmutter 26 sich die Spreizhülse nicht mehr aufweiten läßt und infolgedessen der Konus auch nicht näher an den das Widerlager bildenden Bauteil 10 herangezogen werden kann, verbiegt sich die mit der Stirnfläche 25 am Widerlager anliegende axiale Verformungszone, gegebenenfalls unter Aufrollung, nach außen, so daß der Bauteil 10 dichter an den aufgeweiteten Haltebereich des Spreizdübels herangebracht und damit fest gegen die Vorderseite der das Bohrloch 11 enthaltenden Wand 9 angepreßt wird.

Wenn die den Spreizabschnitt aufweisende Dübelhülse für die vorgesehene Tiefe der Wandbohrung nicht ausreicht, kann eine den Abstand bis zum Widerlager bzw. bis zu dem zu befestigenden Bauteil überbrückende Abstandshalterhülse vorgesehen sein, die in Wandstärke und Durchmesser der Dübelhülse etwa entspricht und am bohrlochmündungsseitigen Ende dem Widerlager bzw. dem Bauteil gegenüber die Ausnehmung als axiale Verformungszone enthält.

## Patentansprüche

1. Spreizdübel zur Befestigung in einer Verankerungsbohrung mittels einer wenigstens bohrlochgrundseitig spreizbaren Dübelhülse, mit einer die Hülse längs durchsetzenden Schraube oder einem Gewindebolzen, der einen am Spreizabschnitt der Hülse angreifenden Spreizkonus sowie an seinem dem Spreizkonus gegenüberliegenden Ende ein Widerlager trägt, wobei das Aufweiten des Spreizabschnittes durch Verkürzen des Abstandes des Spreizkonus vom Widerlager erfolgt, und mit einer axialen Verformungszone in Form einer vom Innenumfang der Dübelhülse ausgehenden nutartigen Wandstärkenverringerung, die nach anfänglichem Greifen des Spreizabschnittes der Dübelhülse an der Bohrlochwandung mit einer Verkürzung der Hülsenlänge zur Wirkung kommt, dadurch gekennzeichnet, daß die Wandstärkenverringerung wenigstens aus einer zu der an der Bohrlochmündung befindlichen Stirnseite (25) sowie zum Innenumfang der Dübelhülse (18) hin offenen Ausnehmung besteht, so daß der durch sie erzeugte, am Widerlager (10 bzw. 26) anliegende, in der Stärke verringerte Hülsenwandabschnitt (22) sich im Zug der Hülsenverkürzung radial nach außen aufweitet, und daß die Ausnehmung in einem der beabsichtigten Länge der axialen Verformungszone entsprechenden Tiefenmaß (24) aus der Hülsenwand herausgearbeitet ist.

2. Spreizdübel nach Anspruch 1, bei dem die Dübelhülse aus einer Spreizhülse (30) und einer bohrlochmündungsseitig den Gewindebolzen umfassenden Abstandshalterhülse (36) besteht, dadurch gekennzeichnet, daß die Ausnehmung in Tiefenrichtung von der bohrlochmündungsseitigen Stirnseite der Abstandshalterhülse (36) ausgeht.

3. Spreizdübel nach Anspruch 1 oder 2, dadurch gekennzeichnet, daß die axiale Verformungszone aus einer sowohl vom Innen- als auch vom Außendurchmesser her erfolgten Wandstärkenverringerung der Hülse besteht.

4. Spreizdübel nach einem der vorhergehenden Ansprüche, dadurch gekennzeichnet, daß zwischen dem durch die Ausnehmung in der Wandstärke verringerten Wandabschnitt und der Innenwand der Dübelhülse ein allmählicher Übergang (21 ; 23) vorgesehen ist.

5. Spreizdübel nach einem der vorhergehenden Ansprüche, dadurch gekennzeichnet, daß der die axiale Verformungszone bildende Wandabschnitt verringerter Wandstärke in Richtung auf seine Stirnseite verjüngt ist.

## Claims

1. Expansion anchor intended for being secured in a bore hole by means of an anchor sleeve, which is adapted to expand at least at its end towards the hole bottom, comprising a threaded spindle or bolt extending through the sleeve, which carries an expanding cone acting on the expansion portion of the sleeve, and a support at its end opposite to the expanding cone, whereby expansion of the expansion portion is effected by reducing the distance between the expanding cone and the support, and also comprising an axial deformation zone having the form of a groove-like reduction of wall thickness at the inner circumference of the sleeve, which comes to effect as a reduction of sleeve length after the initial grip of the expansion portion of the sleeve at the wall of the bore hole, characterized in that the reduction of wall thickness consists at least of a recess, which opens at itś front face (25) towards the entrance side of the bore hole and also towards the inner circumference of the sleeve (18), such that the wall portion (22) of the sleeve, which by the recess is of reduced thickness and abuts the support (10 or 26) will radially expand during the process of length reduction of the sleeve, and in that the recess is worked out of the sleeve wall at an amount of length corresponding to the intended length of said axial deformation zone.

2. Expansion anchor as in claim 1, wherein the anchor sleeve consists of an expanding sleeve (30) and a spacer sleeve (36) surrounding the threaded bolt at its end directed towards the mouth of the bore hole, characterized in that the recess in direction of depth issues from the front surface of the spacer sleeve (36) at its side directed towards the mouth of the bore hole.

3. Expansion anchor as in claim 1 or 2, characterized in that the axial deformation zone comprises a reduction of wall thickness of the sleeve issuing both from its inner diameter and from its outer diameter.

4. Expansion anchor as in one of the preceding claims, characterized in that a smooth transition (21 ; 23) is provided between the wall portion reduced in its wall thickness by the recess and the inner wall of the sleeve.

5. Expansion bolt as in one of the preceding claims characterized in that the wall portion of reduced wall thickness forming the axial deformation zone is tapered towards its front face.

**Revendications**

1. Boulon d'ancrage à expansion destiné à la fixation dans un trou d'alésage au moyen d'au moins une douille expansible, comprenant une tige filetée où un boulon traversant longitudinalement la douille et portant un cône d'expansion étant prévu d'actionner sur une partie d'écartement de la douille et une butée à l'extrémité opposée du cône d'expansion, le procédé d'élargir la partie d'écartement étant accompli pour raccourcir la distance entre le cône et la butée, et aussi comprenant une zone de déformation axiale en forme d'une diminution d'épaisseur de paroi comme une gorge sortant de la circonférence interne de la douille qui est mise en fonction par diminution de la longueur de douille après l'ancrage initial de la partie d'écartement de la douille à la paroi de trou d'alésage caractérisé en ce que la diminution d'épaisseur de paroi se compose d'au moins un évidement ouvert à la face de front située à la bouche de trou et à la circonférence interne de la douille (18) pour que la partie de la paroi de la douille (22) diminuée à son épaisseur appuyant à la butée (10 ou 26) s'élargisse radialement pendant la diminution de la douille, et en ce que l'évidement est façonné dans la paroi de la douille dans une dimension de profondeur correspondant à la longueur de la zone de déformation axiale.

2. Boulon d'ancrage à expansion selon revendication 1, dans lequel la douille pour le boulon d'ancrage se compose d'une douille d'écartement (30) et une douille d'espacement (36) embrassant le boulon fileté à son extrémité adjacente de la bouche du trou d'alésage, caractérisé en ce que l'évidement en direction de la profondeur commence à la face frontale de la douille d'espacement (36) située à la bouche du trou.

3. Boulon d'ancrage à expansion selon revendication 1 ou 2 caractérisé en ce que la zone de déformation axiale se compose d'une diminution d'épaisseur de paroi de la douille façonnée dans la circonférence interne aussi que dans la circonférence externe.

4. Boulon d'ancrage à expansion selon une des revendications précédentes, caractérisé par une transition graduelle (21 ; 22) entre la partie de la paroi diminuée dans son épaisseur par l'évidement et la paroi interne de la douille.

5. Boulon d'ancrage à expansion selon une des revendications précédentes, caractérisé en ce que la partie de paroi d'épaisseur diminuée formant la zone de déformation axiale est effilée dans la direction à l'extrémité de front.